(19) Europäisches Patentamt

European Patent Office

Office européen des brevets

(11) **EP 4 528 586 A1**

(12) **EUROPEAN PATENT APPLICATION**

(43) Date of publication:
**26.03.2025 Bulletin 2025/13**

(21) Application number: **24201686.3**

(22) Date of filing: **20.09.2024**

(51) International Patent Classification (IPC):
***G06N 3/008*** (2023.01)

(52) Cooperative Patent Classification (CPC):
**G06N 3/008**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.09.2023 JP 2023159318**

(71) Applicant: CASIO COMPUTER CO., LTD.
**Tokyo 151-8543 (JP)**

(72) Inventors:
- **Hasegawa, Hirokazu**
  **Hamura-shi, Tokyo, 205-8555 (JP)**
- **Ichikawa, Erina**
  **Hamura-shi, Tokyo, 205-8555 (JP)**
- **Urano, Miyuki**
  **Hamura-shi, Tokyo, 205-8555 (JP)**
- **Mayuzumi, Kouki**
  **Hamura-shi, Tokyo, 205-8555 (JP)**

(74) Representative: **Grünecker Patent- und Rechtsanwälte**
**PartG mbB**
**Leopoldstraße 4**
**80802 München (DE)**

(54) **ROBOT, ROBOT CONTROL METHOD AND PROGRAM**

(57)      A robot (200) acts autonomously and includes a first table, a second table, and a controller (110). The first table stores a growth parameter indicating a growth of the robot (200) and data indicating behavior information specifying an action of the robot (200) corresponding to the growth parameter in association with each other. The second table stores data indicating the behavior information and data indicating an action file defining the action of the robot (200) in association with each other. The controller (110) acquires the growth parameter and causes, based on data stored in the first table and data stored in the second table, the robot (200) to perform an action corresponding to the acquired growth parameter.

# FIG. 2

FRONT ⟷ REAR

EP 4 528 586 A1

# FIG. 9

**Description**

The present disclosure relates to a robot, a robot control method, and a program.

In the related art, robots are known that simulate living organisms such as pets. For example, Patent Literature 1(Unexamined Japanese Patent Application Publication No. 2003-285286) describes a robot device that can cause a user to feel a sense of pseudo-growth by acting out a scenario corresponding to a value of a growth parameter.

The robot described in Patent Literature 1 can simulate the growth of a living creature by acting out the scenario corresponding to the value of the growth parameter. To simulate the growth of a living creature, the action is changed according to a growth days count, personality, an emotion, and the like. This action is achieved by selection or combination of basic functions that are registered motions and animal sounds and that are incorporated into a program depending on various situations. However, adding a new action, such as a motion or animal sound, requires modification of the program, producing difficulty in expansion.

The present disclosure is made to solve the above problem, and an objective of the present disclosure is to provide a robot, a robot control method, and a program that enable a great extensibility and a realistic simulation of a living creature.

To achieve the aforementioned objective, a robot according to an aspect of the present disclosure includes:

at least one memory storing a first table and a second table, the first table storing a growth parameter indicating a growth of the robot and data indicating behavior information specifying an action of the robot corresponding to the growth parameter in association with each other, the second table storing data indicating the behavior information and data indicating an action file defining the action of the robot in association with each other; and
at least one processor configured to acquire the growth parameter and cause, based on data stored in the first table and data stored in the second table, the robot to perform an action corresponding to the acquired growth parameter.

According to the present disclosure, a robot, a robot control method, and a program that enable a great extensibility and a realistic simulation of a living creature, can be provided.

A more complete understanding of this application can be obtained when the following detailed description is considered in conjunction with the following drawings, in which:

FIG. 1 illustrates an appearance of a robot according to an embodiment;

FIG. 2 is a cross-sectional view of the robot according to the embodiment, viewed from a side;

FIG. 3 illustrates a housing of the robot according to the embodiment;

FIG. 4 is a first drawing illustrating a movement of a twist motor of the robot according to the embodiment;

FIG. 5 is a second drawing illustrating a movement of the twist motor of the robot according to the embodiment;

FIG. 6 is a first drawing illustrating a movement of a vertical motor of the robot according to the embodiment;

FIG. 7 is a second drawing illustrating a movement of the vertical motor of the robot according to the embodiment;

FIG. 8 is a block diagram illustrating configuration of the robot according to the embodiment;

FIG. 9 illustrates an example of an emotion map according to the embodiment;

FIG. 10 illustrates an example of a personality value radar chart according to the embodiment;

FIG. 11 illustrates an example of a selection table according to the embodiment;

FIG. 12 illustrates an example of a behavior table according to the embodiment;

FIG. 13 illustrates an example of an action table according to the embodiment;

FIG. 14 is a flowchart illustrating robot control processing according to the embodiment; and

FIG. 15 is a flowchart illustrating a flow of action control processing according to the embodiment.

Hereinafter, an embodiment of the present disclosure is described with reference to the drawings. In these drawings, components that are the same or equivalent are assigned the same reference sign.

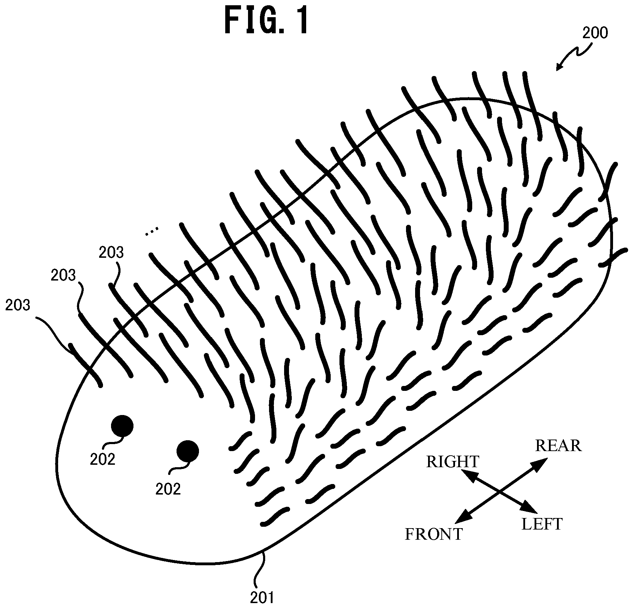

FIGS. 1 to 3 illustrate appearances of a robot 200 according to the present embodiment. The robot 200 is a device that autonomously acts without direct operations by a user. As illustrated in FIG. 1, the robot 200 is a pet robot that resembles a small animal. The robot 200 includes an outer cover 201 provided with decorative parts 202 resembling eyes and bushy fur 203.

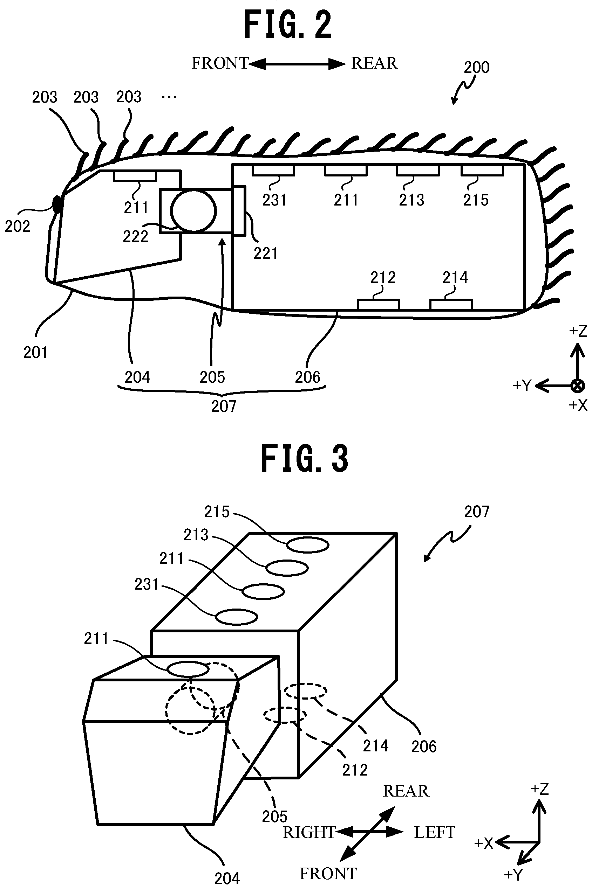

As illustrated in FIGS. 2 and 3, the robot 200 includes a housing 207. The housing 207 is covered by the outer cover 201, and is accommodated inside the outer cover 201. The housing 207 includes a head 204, a joint 205, and a body 206. The joint 205 couples the head 204 to the body 206.

The outer cover 201 is an example of an outer cover member, is elongated in a front-rear direction, and has a bag-like shape that is capable of accommodating the housing 207 therein. The outer cover 201 is formed in a barrel shape from the head 204 to the body 206, and integrally covers the body 206 and the head 204. Due to the outer cover 201 having such a shape, the robot 200 is formed in a shape as if lying on its belly.

An outer material of the outer cover 201 imitates the feel of touching a small animal, and is formed from an artificial pile fabric that resembles the fur 203 of a small animal. A lining of the outer cover 201 is formed from synthetic fibers, natural fibers, natural leather, artificial leather, a synthetic resin sheet material, a rubber sheet material, or the like. The outer cover 201 is formed from such a flexible material, and thus, conforms to the movement of the housing 207. Specifically, the outer cover 201 conforms to a rotation of the head 204 relative to the body 206.

In order to allow the outer cover 201 to conform to the movement of the housing 207, the outer cover 201 is attached to the housing 207 with non-illustrated snap buttons. Specifically, at least one snap button is provided at the front of the head 204, and at least one snap button is provided at the rear of the body 206. Moreover, snap buttons capable of engaging with the snap buttons provided at the head 204 and the body 206 are also provided at corresponding positions of the outer cover 201, and the outer cover 201 is fixed to the housing 207 with the snap buttons. The numbers and positions of the snap buttons are merely examples, and can be changed freely.

The body 206 extends in the front-rear direction and is in contact via the outer cover 201 with a placement surface, such as floor or table, on which the robot 200 is placed. The body 206 includes a twist motor 221 at a front end thereof. The head 204 is coupled to the front end of the body 206 via the joint 205. The joint 205 includes a vertical motor 222. Although FIG. 2 illustrates configuration in which the twist motor 221 is included in the body 206, the twist motor 221 may be included in the joint 205. The head 204 is coupled to the body 206 so as to be rotatable, with twist motor 221 and the vertical motor 222, about a right-left direction and the front-rear direction of the robot 200 as axes.

As XYZ coordinate axes, an X axis and a Y axis are set in the horizontal plane, and a Z axis is set in the vertical direction. The + direction of the Z axis corresponds to vertically upward. In the following, for easy explanation, the robot 200 is taken to be placed on the placement surface such that the right-left direction (the width direction) of the robot 200 matches the X-axis direction and the front-rear direction of the robot 200 matches the Y-axis direction.

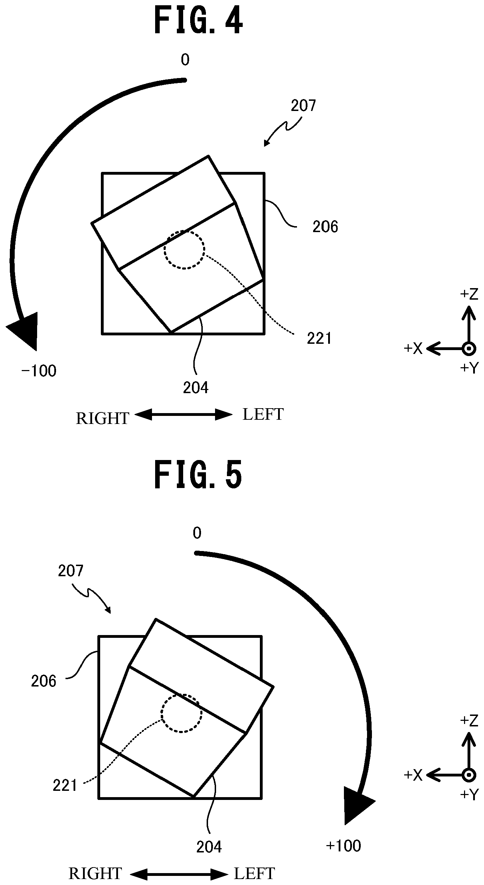

The joint 205 couples the body 206 and the head 204 so as to enable rotation around a first rotational axis that passes through the joint 205 and that extends in the front-rear direction (the Y direction) of the body 206. As illustrated in FIGS. 4 and 5, the twist motor 221 rotates the head 204, relative to the body 206, clockwise (right rotation) within a forward rotation angle range around the first rotational axis (forward rotation), counter-clockwise (left rotation) within a reverse rotation angle range around the first rotational axis (reverse rotation), and the like.

The clockwise direction in this description means the clockwise direction when viewed from the body 206 toward the head 204. The clockwise rotation and the counterclockwise rotation are also referred to as the "rightward twist rotation" and the "leftward twist rotation", respectively. The maximum value of the angle at which the head 204 is twist rotated rightward (right turn) or leftward (left turn) can be freely selected. In FIGS. 4 and 5, the angle of the head 204 in a state in which the head 204 is not twisted to the right or the left (hereinafter, "twist reference angle") is expressed by 0. An angle when twist rotated most to the left (rotated counter-clockwise) is expressed as -100, and an angle when twist rotated most to the right (rotated clockwise) is expressed as +100.

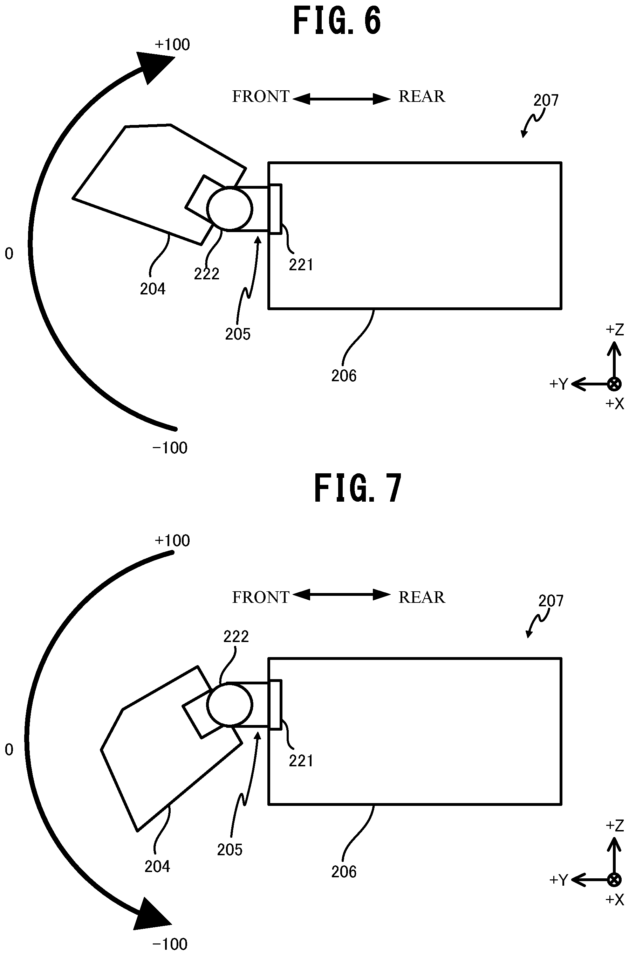

Additionally, the joint 205 couples the body 206 and the head 204 so as to enable rotation around a second rotational axis that passes through the joint 205 and that extends in the right-left direction (the width direction, the X direction) of the body 206. As illustrated in FIGS. 6 and 7, the vertical motor 222 rotates the head 204 upward (forward rotation) within a forward rotation angle range around the second rotational axis, downward (reverse rotation) within a reverse rotation angle range around the second rotational axis, and the like.

Although a maximum value of the angle of rotation upward or downward can be set freely, in FIGS. 6 and 7, the angle of the head 204 in a state in which the head 204 is not rotated upward or downward (hereinafter, "vertical reference angle") is expressed by 0, an angle when rotated most downward is expressed as -100, and an angle when rotated most upward is expressed as +100.

As illustrated in FIGS. 2 and 3, the robot 200 includes a touch sensor 211 on the head 204 and the body 206. The robot 200 can detect, with the touch sensor 211, petting or striking of the head 204 or the body 206 by the user.

The robot 200 includes, on the body 206, an acceleration sensor 212, a microphone 213, a gyrosensor 214, an illuminance sensor 215, and a speaker 231. With the acceleration sensor 212 and the gyrosensor 214, the robot 200 can detect a change of an attitude of the robot 200 itself, and can detect being picked up, the orientation being changed, being thrown, and the like by the user. The robot 200 can detect, with the illuminance sensor 215, an ambient illuminance of the robot 200. The robot 200 can detect external sounds with the microphone 213. The robot 200 can emit animal sounds with the speaker 231.

The acceleration sensor 212, the microphone 213, the gyrosensor 214, the illuminance sensor 215, and the speaker 231 are not necessarily provided only on the body 206, and at least a portion of these elements may be provided on the head 204, or may be provided on both the body 206 and the head 204.

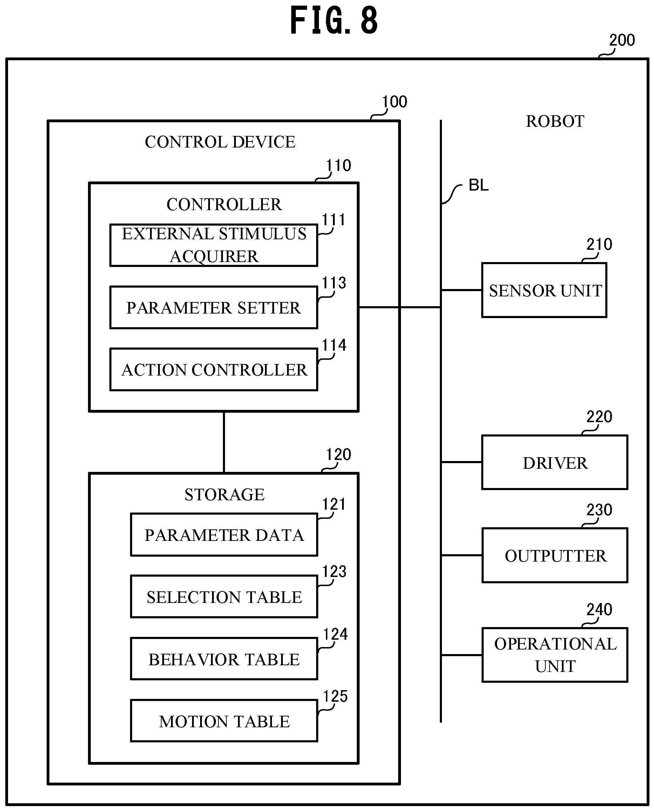

Next, functional configuration of the robot 200 is described with reference to FIG. 8. As illustrated in FIG. 8, the robot 200 includes a control device 100, a sensor unit 210, a driver 220, an outputter 230, and an operational unit 240. In one example, these components are connected via a bus line BL. Note that a configuration may be employed in which, instead of the bus line BL, a wired interface such as a universal serial bus (USB) cable, or a wireless interface such as Bluetooth (registered trademark), is used.

The control device 100 includes a controller 110 and a storage 120. The control device 100 controls, with the controller 110 and the storage 120, the actions of the robot 200.

The controller 110 includes a central processing unit (CPU). In one example, the CPU is a microprocessor or the like and is a central processing unit that executes a variety of processing and operations. In the controller 110, the CPU reads out a control program stored in a ROM and controls the actions of the entire robot 200 while using the RAM as a working memory. Additionally, although not illustrated in the drawings, the controller 110 is provided with a clock function, a timer function, and the like, and thus can measure the date and time, and the like.

The storage 120 includes a read-only memory (ROM), a random access memory (RAM), a flash memory, and the like. The storage 120 stores programs and data, including an operating system (OS) and an application program, to be used by the controller 110 to execute various types of processing. Moreover, the storage 120 stores data generated or acquired through execution of the various types of processing by the controller 110.

The sensor unit 210 includes the touch sensor 211, the acceleration sensor 212, the gyrosensor 214, the illuminance sensor 215, and the microphone 213 that are described above. The controller 110 acquires, via the bus line BL and as an external stimulus, detection values detected by the various sensors included in the sensor unit 210. The sensor unit 210 may include a sensor other than the touch sensor 211, the acceleration sensor 212, the gyrosensor 214, and the microphone 213. The types of external stimuli acquirable by the controller 110 can be increased by increasing the types of sensors included in the sensor unit 210.

The touch sensor 211 includes, for example, a pressure sensor and a capacitance sensor, and detects contacting by some sort of object. The controller 110 can detect, based on detection values of the touch sensor 211, that the robot 200 is being pet, is being struck, and the like by the user.

The acceleration sensor 212 detects an acceleration applied to the body 206 of the robot 200. The acceleration sensor 212 detects an acceleration in each of the X-axis direction, the Y-axis direction, and a Z-axis direction, that is, acceleration on three axes.

In one example, the acceleration sensor 212 detects gravitational acceleration when the robot 200 is stationary. The controller 110 can detect a current attitude of the robot 200 based on the gravitational acceleration detected by the acceleration sensor 212. In other words, the controller 110 can detect, based on the gravitational acceleration detected by the acceleration sensor 212, whether the housing 207 of the robot 200 is inclined from a horizontal direction. Thus, the acceleration sensor 212 functions as incline detection means for detecting the inclination of the robot 200.

Additionally, when the user picks up or throws the robot 200, the acceleration sensor 212 detects, in addition to the gravitational acceleration, acceleration caused by the move of the robot 200. Accordingly, the controller 110 can detect a movement of the robot 200 by removing a component of the gravitational acceleration from the detection value detected by the acceleration sensor 212.

The gyrosensor 214 detects an angular velocity when rotation is applied to the body 206 of the robot 200. Specifically, the gyrosensor 214 detects the angular velocity on three axes of rotation, namely rotation around the X-axis direction, rotation around the Y-axis direction, and rotation around the Z-axis direction. Combining the detection values detected by the acceleration sensor 212 and the detection values detected by the gyrosensor 214 enables more accurate detection of the movement of the robot 200.

The touch sensor 211, the acceleration sensor 212, and the gyrosensor 214 respectively detect a strength of the contact, the acceleration, and the angular velocity at a synchronized timing, for example, every 0.25 seconds, and output the detection values to the controller 110.

The microphone 213 detects an ambient sound of the robot 200. The controller 110 can detect, based on a component of the sound detected by the microphone 213, for example, that the user is speaking to the robot 200, that the user is clapping hands, and the like.

The illuminance sensor 215 detects the ambient illuminance of the robot 200. The controller 110 can detect, based on the illuminance detected by the illuminance sensor 215, that the surroundings of the robot 200 have become brighter or darker.

The driver 220 includes the twist motor 221 and the vertical motor 222, and is driven by the controller 110. The twist motor 221 is a servo motor for rotating the head 204, relative to the body 206, in the right-left direction (the width direction) about the front-rear direction as an axis. The vertical motor 222 is a servo motor for rotating the head 204, relative to the body 206, in the up-down direction (height direction) about the right-left direction as an axis. The robot 200 can express movements of turning the head 204 sideways by using the twist motor 221, and can express movements of lifting/lowering the head 204 by using the vertical motor 222.

The outputter 230 includes the speaker 231, and sound is output from the speaker 231 as a result of sound data being input into the outputter 230 by the controller 110. For example, the robot 200 emits a pseudo-animal sound as a result of the controller 110 inputting animal sound data of the robot 200 into the outputter 230.

Instead of the speaker 231, or in addition to the speaker 231, a display such as a liquid crystal display, a light emitter such as a light emitting diode (LED), or the like may be provided as the outputter 230, to display emotions such as joy, sadness, and the like on the display, express such emotions by the color and brightness of emitted light, or the like.

The operational unit 240 includes an operation button, a volume knob, or the like. In one example, the operational unit 240 is an interface for receiving user operations for turning the power on or off, adjusting the volume of an output sound, and the like.

Next, functional configuration of the controller 110 is described. As illustrated in FIG. 8, the controller 110 functionally includes an external stimulus acquirer 111 that is an example of external stimulus acquiring means, a parameter setter 113 that is an example of parameter setting means, and an action controller 114 that is an example of action control means. In the controller 110, the CPU performs control by reading the program stored in the ROM out to the RAM and executing this program, to thereby function as the components described above.

The storage 120 stores parameter data 121, a selection table 123, a behavior table 124, and an action table 125. The selection table 123 is an example of a first table. The behavior table 124 is an example of a second table.

The external stimulus acquirer 111 acquires an external stimulus. The external stimulus is a stimulus that acts on the robot 200 from outside the robot 200. Examples of the external stimulus include "there is a loud sound", "spoken to", "petted", "picked up", "turned upside down", "became brighter", "became darker", and the like. In the following, the external stimulus is also referred to as the "event."

The external stimulus acquirer 111 acquires the external stimulus based on the detection values of the sensor unit 210. More specifically, the external stimulus acquirer 111 acquires a plurality of external stimuli of mutually different types with the plurality of sensors (the touch sensor 211, the acceleration sensor 212, the microphone 213, the gyrosensor 214, and the illuminance sensor 215) included in the sensor unit 210.

In one example, the external stimulus acquirer 111 acquires, with the microphone 213, the external stimulus due to "there is a loud sound" or "spoken to". The external stimulus acquirer 111 acquires, with the touch sensor 211, the external stimulus due to "petted". The external stimulus acquirer 111 acquires, with the acceleration sensor 212 and the gyrosensor 214, the external stimulus due to "picked up" or "turned upside down". The external stimulus acquirer 111 acquires, with the illuminance sensor 215, the external stimulus due to "became brighter" or "became darker".

The parameter setter 113 sets the parameter data 121. The parameter data 121 is data that defines various types of parameters related to the robot 200. Specifically, the parameter data 121 contains: (1) a growth days count, (2) an emotion parameter, (3) an emotion change amount, and (4) a personality parameter.

(1) Growth Days Count

The growth days count represents the number of days of pseudo-growth of the robot 200. The robot 200 is pseudo-born at the time of first start up by the user after factory shipping, and grows from a baby to an adult over a predetermined growth period. The growth days count corresponds to the number of days since the pseudo-birth of the robot 200. The growth days count is an example of a growth parameter indicating a growth of a robot.

An initial value of the growth days count is 0, and the parameter setter 113 adds 1 to the growth days count for each passing day. The time of first start up is an example of a reference date and time, and the growth days count is an example of an "elapsed time from the reference date and time" that indicates a growth of a robot.

(2) Emotion Parameter

The parameter setter 113 sets an emotion parameter. The emotion parameter is a parameter that represents a pseudo-emotion of the robot 200. The emotion parameter is expressed by coordinates (X, Y) on an emotion map 300.

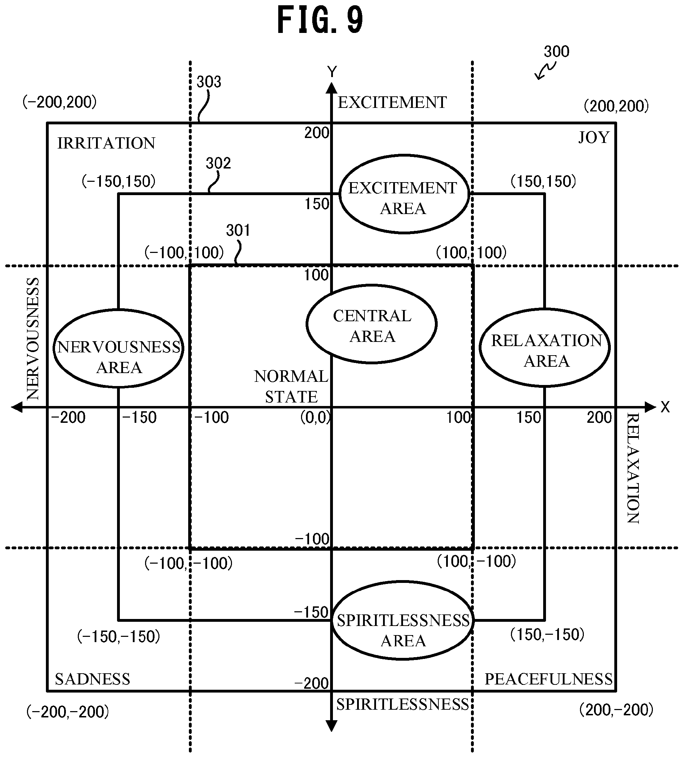

As illustrated in FIG. 9, the emotion map 300 is expressed by a two-dimensional coordinate system with a degree of relaxation (degree of nervousness) axis as an X axis, and a degree of excitement (degree of spiritlessness) axis as a Y axis. The origin (0, 0) on the emotion map 300 represents an emotion when normal. When a value of an X-coordinate (X value) is positive, a larger absolute value thereof represents an emotion with a higher degree of relaxation, and when the X value is negative, a larger absolute value thereof represents an emotion with a higher degree of nervousness. When a value of a Y-coordinate (Y value) is positive, a larger absolute value thereof represents an emotion with a higher degree of excitement, and when the Y value is negative, a larger absolute value thereof represents an emotion with a higher degree of spiritlessness.

The emotion parameter represents a plurality of (in the present embodiment, four) mutually different pseudo-emotions. In FIG. 9, of the values representing pseudo-emotions, the degree of relaxation and the degree of nervousness are represented together on one axis (X axis), and the degree of excitement and the degree of spiritlessness are represented together on another axis (Y axis). Accordingly, the emotion parameter has two values, namely the X value (degree of relaxation, degree of nervousness) and the Y value (degree of excitement, degree of spiritlessness), and a point on the emotion map 300 represented by the X value and the Y value represents the pseudo-emotions of the robot 200. An initial value of the emotion parameter is (0, 0).

Although FIG. 9 illustrates expressing the emotion map 300 by a two-dimensional coordinate system, any dimension may be used for the emotion map 300. A configuration may be employed in which the emotion map 300 is defined by one dimension, and one value is set as the emotion parameter. Additionally, a configuration may be employed in which one or more axes are added and the emotion map 300 is defined by a coordinate system of three or more dimensions, and a number of values corresponding to the number of dimensions of the emotion map 300 are set as the emotion parameter.

Regarding initial values of the size of the emotion map 300, as illustrated by a frame 301 of FIG. 9, a maximum value of both the X value and the Y value is 100 and a minimum value is -100. During a growth period of the robot 200 (for example, fifty days), each time the pseudo growth days count of the robot 200 increases one day, the parameter setter 113 increases both the maximum value and the minimum value of the emotion map 300 by two.

At a timing when the growth days count exceeds half of the growth period (for example, twenty five days), as illustrated by a frame 302 of FIG. 9, the maximum value of the X value and the Y value is 150 and the minimum value is -150. Moreover, when the growth period (for example, fifty days) elapses, the pseudo-growth of the robot 200 stops. At this timing, as illustrated by a frame 303 of FIG. 9, the maximum value of the X value and the Y value is 200 and the minimum value is -200. Thereafter, the size of the emotion map 300 is fixed.

The emotion map 300 defines a settable range of the emotion parameter. Thus, as the size of the emotion map 300 expands, the settable range of the emotion parameter expands. Due to the expansion of the settable range of the emotion parameter, richer emotion expression becomes possible, and thus, the pseudo-growth of the robot 200 is expressed by the expansion of the size of the emotion map 300.

The condition for stopping the pseudo-growth of the robot 200 is not limited to the elapse of the growth period, and another condition may be added.

(3) Emotion Change Amount

The emotion change amount is data expressing degrees to which the pseudo-emotions of the robot 200 are changed, and defines, for each of the X value and the Y value of the emotion parameter, an amount of change by which the value is to be increased or decreased. The emotion change amount is expressed by the four variables bellow. DXP and DXM respectively increase and decrease the X value of the emotion parameter. DYP and DYM respectively increase and decrease the Y value of the emotion parameter.

DXP: Tendency to relax (tendency to change in the positive value direction of the X value on the emotion map)
DXM: Tendency to be nervous (tendency to change in the negative value direction of the X value on the emotion map)
DYP: Tendency to be excited (tendency to change in the positive value direction of the Y value on the emotion map)
DYM: Tendency to be spiritless (tendency to change in the negative value direction of the Y value on the emotion map)

The initial value of each of DXP, DXM, DYP, and DYM as the emotion change amounts is 10, and these various values are updated by learning that is described later. The parameter setter 113 updates the emotion parameter by adding or subtracting a value, among DXP, DXM, DYP, and DYM as the emotion change amounts, corresponding to the external stimulus to or from the current emotion parameter.

For example, when the head 204 is petted, the robot 200 is caused to have the pseudo-emotion of being relaxed, and thus, the parameter setter 113 adds DXP to the X value of the emotion parameter. Conversely, when the head 204 is struck, the robot 200 is caused to have the pseudo-emotion of being nervous, and thus, the parameter setter 113 subtracts DXM from the X value of the emotion parameter. Which emotion change amount is associated with the various external stimuli can be set freely. An example is given below.

The head 204 is petted (relax): X = X+DXP
The head 204 is struck (nervous): X = X-DXM
(these external stimuli can be detected by the touch sensor 211 of the head 204)
The body 206 is petted (excite): Y = Y+DYP
The body 206 is struck (spiritless): Y = Y-DYM
(these external stimuli can be detected by the touch sensor 211 of the body 206)
Held with head upward (joyful): X = X+DXP and Y = Y+DYP
Suspended with head downward (sad): X = X-DXM and Y = Y-DYM
(these external stimuli can be detected by the touch sensor 211 and the acceleration sensor 212)
Spoken to in kind voice (peaceful): X = X+DXP and Y = Y-DYM
Yelled at in loud voice (irritated): X = X-DXM and Y = Y+DYP
(these external stimuli can be detected by the microphone 213)

The external stimulus acquirer 111 acquires, with the plurality of sensors of the sensor unit 210, a plurality of external stimuli of mutually different types. Thus, the parameter setter 113 variously derives the emotion change amount in accordance with each individual external stimulus of the plurality of external stimuli, and sets the emotion parameter in accordance with the derived emotion change amount.

The maximum value and the minimum value of the X value and the Y value of the emotion parameter are defined by the size of the emotion map 300. Thus, in the case where a value as a result of the operations described above exceeds the maximum value of the emotion map 300, the maximum value is set, and in the case where the value is lower than the minimum value of the emotion map 300, the minimum value is set.

The parameter setter 113 updates the various variables, namely DXP, DXM, DYP, and DYM as the emotion change amounts, in accordance with the external stimuli acquired by the external stimulus acquirer 111. Specifically, when the X value of the emotion parameter is set to the maximum value of the emotion map 300 even once in one day, the parameter setter 113 adds 1 to DXP, and when the Y value of the emotion parameter is set to the maximum value of the emotion map 300 even once in one day, the parameter setter 113 adds 1 to DYP. Additionally, when the X value of the emotion parameter is set to the minimum value of the emotion map 300 even once in one day, the parameter setter 113 adds 1 to DXM, and when the Y value of the emotion parameter is set to the minimum value of the emotion map 300 even once in one day, the parameter setter 113 adds 1 to DYM.

As described above, the parameter setter 113 changes the emotion change amount in accordance with a condition based on whether the value of the emotion parameter reaches the maximum value or the minimum value of the emotion map 300. The updating of these various variables is called learning of the emotion change amount. As an example, assume that all of the initial values of the various variables as the emotion change amounts are set to 10. The parameter setter 113 increases the various variables to a maximum of 20 by the updating (learning) described above. Due to this learning processing, the emotion change amount, that is, the degree of change of emotion, changes.

For example, when only the head 204 is petted multiple times, only DXP as the emotion change amount increases and the other emotion change amounts do not change, and thus, the robot 200 develops a personality of having a tendency to be relaxed. When only the head 204 is struck multiple times, only DXM as the emotion change amount increases and the other emotion change amounts do not change, and thus, the robot 200 develops a personality of having a tendency to be nervous. As described above, the parameter setter 113 changes the emotion change amount in accordance with various external stimuli.

The value added to the various variables as the emotion change amounts is not limited to 1. For example, a configuration may be employed in which a number of times at which each value of the emotion parameter is set to the maximum value or the minimum value of the emotion map 300 is counted and, when that number of times is great, the numerical value to be added to the emotion change amount is increased. Moreover, the condition for learning the emotion change amount is not limited to that described above. For example, a configuration may be employed in which the emotion change amount is learned when the X value or the Y value of the emotion parameter reaches a predetermined value (for example, a value 0.5-times the maximum value or a value 0.5-times the minimum value of the emotion map 300) even once. Additionally, the period is not limited to a period of one-day, and a configuration may be employed in which the emotion change amount is learned when the X value or the Y value of the emotion parameter reaches a predetermined value even once in another period such as a half-day or one week. Moreover, a configuration may be employed in which the emotion change amount is learned when the X value or the Y value of the emotion parameter reaches a predetermined value even once in a period up to when a number of acquisitions of the external stimulus reaches a predetermined count (for example, 50), instead of in a certain period such as one-day or the like.

(4) Personality Parameter

The personality parameter is a parameter expressing a pseudo-personality of the robot 200. The personality parameter includes a plurality of personality values that express degrees of mutually different personalities. The parameter setter 113 changes the plurality of personality values included in the personality parameter in accordance with external stimuli acquired by the external stimulus acquirer 111.

Specifically, the parameter setter 113 calculates four personality values based on (Equation 1) below. Specifically, a value obtained by subtracting 10 from DXP that expresses a tendency to be relaxed is set as a personality value (happy), a value obtained by subtracting 10 from DXM that expresses a tendency to be nervous is set as a personality value (shy), a value obtained by subtracting 10 from DYP that expresses a tendency to be excited is set as a personality value (active), and a value obtained by subtracting 10 from DYM that expresses a tendency to be spiritless is set as a personality value (spoiled).

$$\text{Personality value (happy)} = \text{DXP-10}$$
$$\text{Personality value (shy)} = \text{DXM-10}$$
$$\text{Personality value (active)} = \text{DYP-10}$$
$$\text{Personality value (spoiled)} = \text{DYM-10}$$
$$\text{(Equation 1)}$$

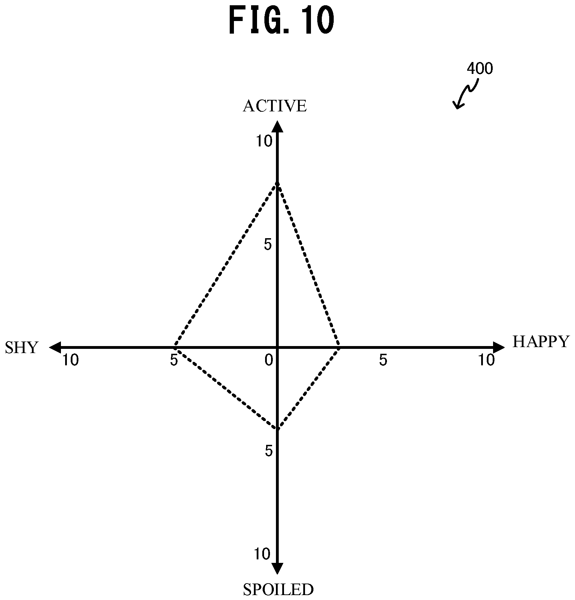

As a result, as illustrated in FIG. 10, a personality value radar chart 400 can be generated by plotting each of the personality value (happy) on a first axis, the personality value (active) on a second axis, the personality value (shy) on a third axis, and the personality value (spoiled) on a fourth axis. Since the various variables as the emotion change amounts each have an initial value of 10 and increase up to 20, the range of the personality value is from 0 to 10.

Since the initial value of each of the personality values is 0, the personality at the time of birth of the robot 200 is expressed by the origin of the personality value radar chart 400. Moreover, as the robot 200 grows, the four personality values change, with an upper limit of 10, due to external stimuli and the like (manner in which the user interacts with the robot 200) detected by the sensor unit 210. Therefore, 11 to the power of 4 = 14,641 types of personalities can be expressed.

Thus, the robot 200 assumes various personalities in accordance with the manner in which the user interacts with the robot 200. That is, the personality of each individual robot 200 is formed differently based on the manner in which the user interacts with the robot 200.

The action controller 114 causes the robot 200 to perform actions based on the data stored in the selection table 123, the behavior table 124, and the action table 125. The action controller 114 executes action control processing using the external stimulus detected by the external stimulus acquirer 111 as a trigger (hereinafter referred to as "action trigger"). Additionally, the action controller 114 performs control for performing a spontaneous action such as a breathing action.

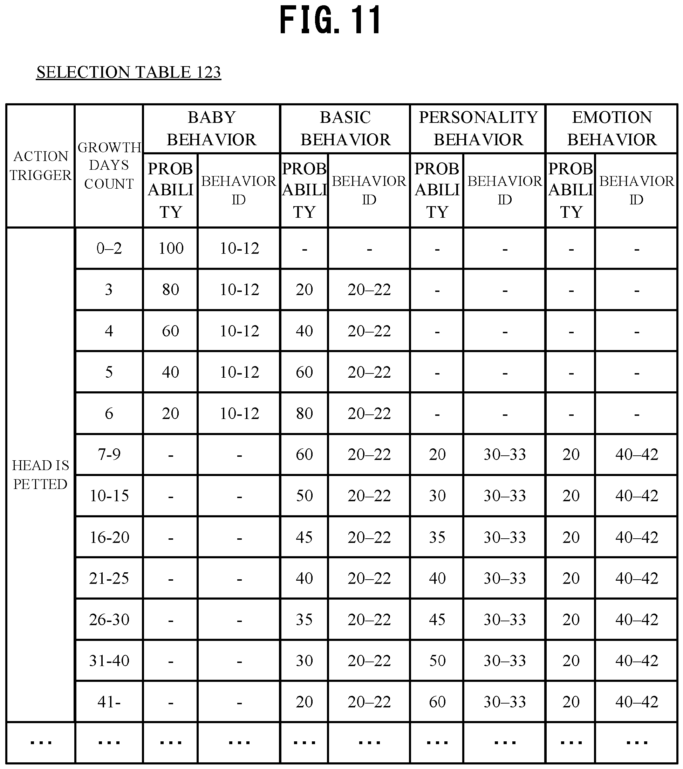

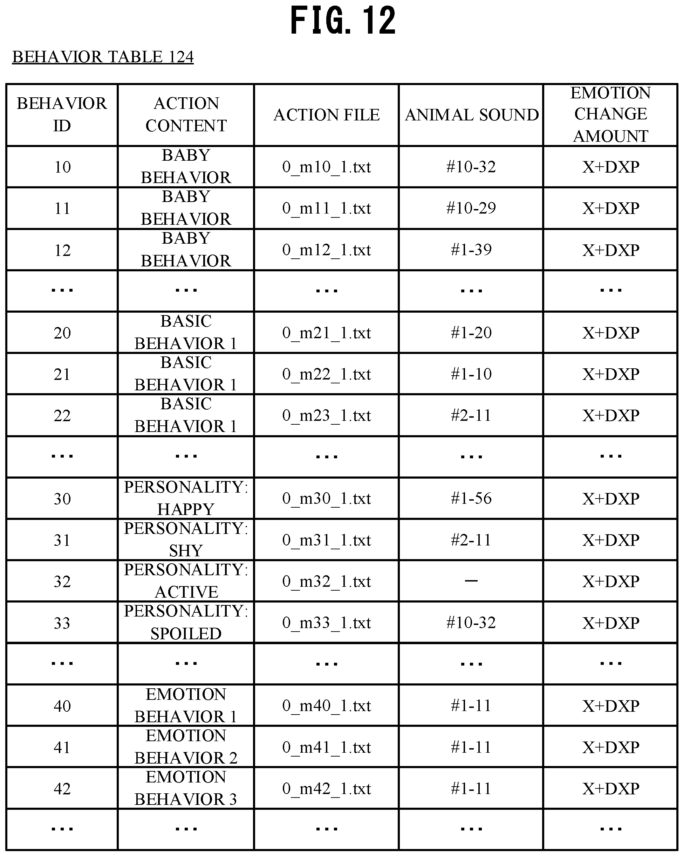

Upon starting the action control processing, the action controller 114 acquires the growth days count, references the selection table 123 illustrated in FIG. 11 and reads out one or more probabilities each being a probability of selecting an action corresponding to the action trigger given when executing the action control processing and to the growth days count. Then the action controller 114 selects, based on the read-out one or more probabilities each being a probability of selecting an action, an action type using random numbers. Next, the action controller 114 selects a behavior identification (ID) from the selected action. The behavior ID specifies an action of the robot 200 in accordance with the growth days count. The behavior ID is an example of behavior information. For example, in the case where "basic behavior" is selected, a selection from among behavior IDs 20-22 is performed using random numbers or the like. In the case where the "personality behavior" is selected, a selection from among the behavior IDs 30-33 is performed based on the personality parameter. Specifically, among the personality value (happy), the personality value (shy), the personality value (active), and the personality value (spoiled), a personality with a largest value is taken to be a personality of the robot 200. In the case where the personality is happy, the behavior ID 30 is selected, in the case where the personality is shy, the behavior ID 31 is selected, in the case where the personality is active, the behavior ID 32 is selected, and in the case where the personality is spoiled, the behavior ID 33 is selected (refer to FIG. 12). In the case where "emotion behavior" is selected, a selection from among behavior IDs 40-42 is performed using random numbers or the like.

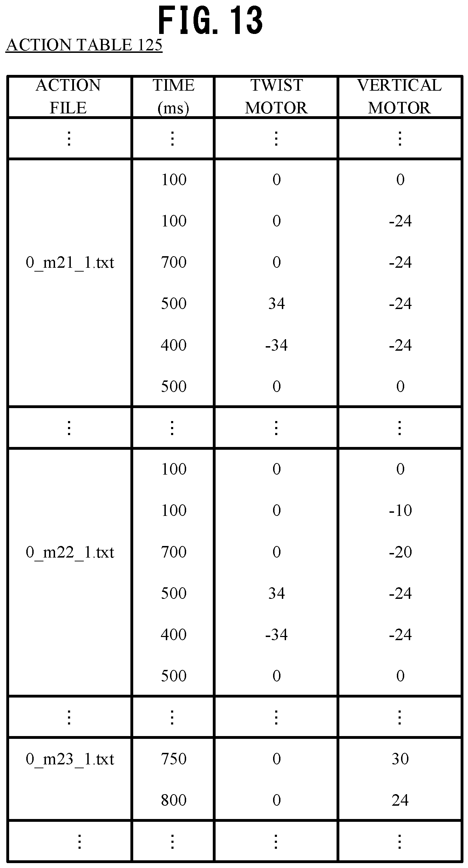

Then the action controller 114 acquires, based on the selected behavior ID, an action file defined in the behavior table 124. The action file is stored in the action table 125 illustrated in FIG. 13. Additionally, in parallel with the acquisition of the action file, the action controller 114 acquires sound data that is stored in the behavior table 124 and that indicates an animal sound. The action controller 114 causes the robot 200 to perform an action based on the action file and the data indicating an animal sound. In the case where "0_m21_1.txt" is selected as the action file, the action controller 114 references the action table 125 illustrated in FIG. 13, and after 100 ms, firstly controls the twist motor 221 and the vertical motor 222 so that the angles are 0 degrees, and then, after 100 ms, controls so that the angle of the vertical motor 222 is -24 degrees. Then the action controller 114 does not rotate for 700 ms thereafter, and then controls so that, after 500 ms, the angle of the twist motor 221 is 34 degrees and the angle of the vertical motor 222 is -24 degrees. Then the action controller 114 controls so that, after 400 ms, the angle of the twist motor 221 is -34 degrees and then controls so that, after 500 ms, the angles of the twist motor 221 and the vertical motor 222 are 0 degrees, thereby completing the action. Additionally, in parallel with the driving of the twist motor 221 and the vertical motor 222, the action controller 114 plays an animal sound of an abrupt whistle through the speaker 231 based on sound data of an abrupt whistle sound.

As illustrated in FIG. 11, the selection table 123 stores, in association with one another, data indicating the action trigger, data indicating the growth days count that is an elapsed time from the reference date and time, data indicating one or more sets of behavior IDs, and data indicating for each of the one or more sets of behavior IDs a probability that the set of behavior IDs is selected. Although a case where the action trigger is "head is petted" is described as an example, the action trigger may be any external stimulus given to the robot 200 and may include "there is a loud sound", "spoken to", "the body is petted", "picked up", "turned upside down", "became brighter", "became darker", and the like. In this case, for each of these action triggers, the selection table 123 stores, in association with one another, the action trigger, data indicating the growth days count, data indicating one or more sets of behavior IDs, and data indicating for each of one or more sets of behavior IDs a probability that the set of behavior IDs is selected. In this example, in the case where the growth days count is between 0 and 2, the "baby behavior" is selected. In the case where the growth days count is between 3 and 6, the "baby behavior" or the "basic behavior" is selected. In the case where the growth days count is 4, the "baby behavior" is selected at a probability of 60% and the "basic behavior" is selected at a probability of 40%. In the case where the growth days count is 7 or more, the "basic behavior", "personality behavior" or "emotion behavior" is selected. In the case where the growth days count is between 16 and 20, the "basic behavior" is selected at a probability of 45%, the "personality behavior" is selected at a probability of 35%, and the "emotion behavior" is selected at a probability of 20%.

As illustrated in FIG. 12, the selection table 124 stores, in association with one another, data indicating the behavior ID, data indicating content of action, data indicating the action file defining the action of the robot 200, sound data indicating an animal sound, and data indicating the emotion change amount. The emotion change amount stored in the behavior table 124 corresponds to the action trigger stored in the selection table 123 with the behavior ID. Therefore, the emotion change amount corresponds to the external stimulus.

As illustrated in FIG. 13, the action table 125 is a table that defines, for each action defined in the selection table 123, the manner in which the action controller 114 controls the twist motor 221 and the vertical motor 222. Specifically, the action table 125 defines, for every action, an action time (ms), an action angle of the twist motor 221 after the action time, and an action angle of the vertical motor 222 after the action time.

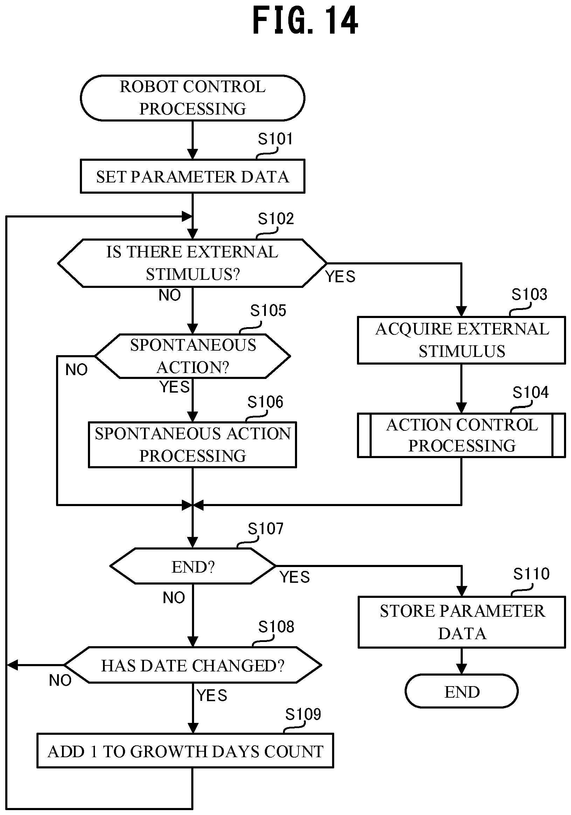

Next, the flow of robot control processing is described with reference to FIG. 14. The robot control processing illustrated in FIG. 14 is executed by the controller 110 of the control device 100, in response to the user turning in the power of the robot 200. The robot control processing is an example of a control method of the robot 200.

Upon starting the robot control processing, the controller 110 functions as the parameter setter 113 and sets the parameter data 121 (step S101). When the robot 200 is started up for the first time (the time of the first start up by the user after factory shipping), the controller 110 sets the various parameters, namely the growth days count, the emotion parameter, the emotion change amount, and the personality parameter, to initial values (for example, 0). Meanwhile, at the time of starting up for the second and subsequent times, the controller 110 reads out the values of the various parameters stored in step S 110, described later, of the robot control processing and sets as the parameter data 121. However, a configuration may be employed in which the values of the emotion parameter are all initialized to 0 each time the power is turned on.

Upon setting the parameter data 121, the controller 110 determines whether there is an external stimulus detected by the sensor unit 210 (step S102). When a determination is made that there is an external stimulus (step S102; YES), the controller 110 functions as the external stimulus acquirer 111 and acquires the external stimulus from the sensor unit 210 (step S103).

Then the controller 110 executes the action control processing, with the external stimulus acquired in step S103 as a trigger (step S104), and thereafter, proceeds to step S107.

Conversely, when a determination is made in step S102 that there is not an external stimulus (step S102; NO), the controller 110 determines whether to perform a spontaneous action such as a breathing action (step S105). Although any method may be used as the method for determining whether to perform the spontaneous action, in one example, it is assumed that the determination in step S105 is "YES" per first reference period (for example, five seconds).

When the spontaneous action is to be performed (step S105; YES), the controller 110 executes, with "passage of the first reference time" as the action trigger, spontaneous action processing including causing a spontaneous action such as the breathing action to be performed (step S106), and thereafter, proceeds to step S107.

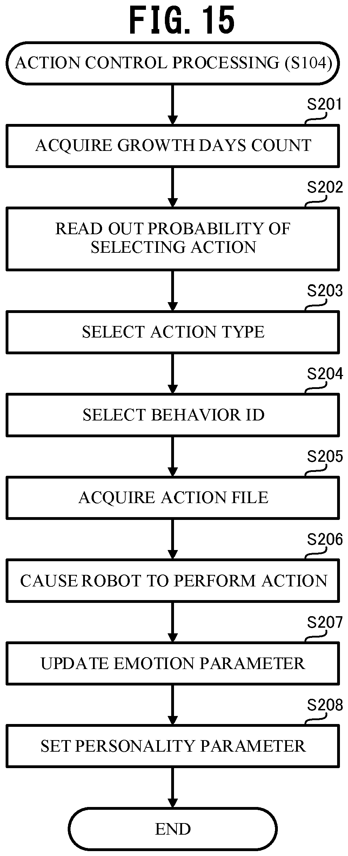

Next, the action control processing executed in step S104 is described with reference to FIG. 15.

Upon starting the action control processing, the controller 110 acquires the growth days count (step S201).

Then the controller 110 references the selection table 123 illustrated in FIG. 11 and reads out one or more probabilities, each being a probability of selecting an action, that are associated with the action trigger given when executing the action control processing and the growth days count acquired in step S201 (step S202). Then the controller 110 selects, based on the read-out one or more probabilities each being a probability of selecting an action, an action type using random numbers (step S203).

For example, in the case where the growth days count is 8 and the action trigger is "head is petted", the controller 110 selects, as the action type, the "basic behavior" at a probability of 60%, the "personality behavior" at a probability of 20%, and the "emotion behavior" at a probability of 20% (refer to FIG. 11).

Then the controller 110 selects the behavior ID from the selected action (step S204). For example, in the case where the "basic behavior" is selected, a selection from among the behavior IDs 20-22 is performed using random numbers or the like. In the case where the "personality behavior" is selected, a selection from among the behavior IDs 30-33 is performed based on the personality parameter. Specifically, among the personality value (happy), the personality value (shy), the personality value (active), and the personality value (spoiled), a personality with a largest value is taken to be a personality of the robot 200. In the case where the personality is happy, the behavior ID 30 is selected, in the case where the personality is shy, the behavior ID 31 is selected, in the case where the personality is active, the behavior ID 32 is selected, and in the case where the personality is spoiled, the behavior ID 33 is selected (refer to FIG. 12). In the case where the "emotion behavior" is selected, a selection from among the behavior IDs 40-42 is performed using random numbers or the like.

Then the controller 110 acquires, based on the selected behavior ID, an action file defined in the behavior table 124 (step S205). The action file is stored in the action table 125 illustrated in FIG. 13. Additionally, in parallel with the acquisition of the action file, the controller 110 acquires sound data indicating an animal sound. The sound data indicating an animal sound is stored in the behavior table 124.

Then the controller 110 causes the robot 200 to perform an action based on the action file and the data indicating an animal sound (step S206). In the case where the ID 20 is selected as the behavior ID and the action file "0_m21_1.txt" is selected as the action file, the controller 110 references the action table 125 illustrated in FIG. 13, and after 100 ms, firstly controls the twist motor 221 and the vertical motor 222 so that the angles are 0 degrees, and then, after 100 ms, controls so that the angle of the vertical motor 222 is -24 degrees. Then the controller 110 does not rotate for 700 ms thereafter, and then controls so that, after 500 ms, the angle of the twist motor 221 is 34 degrees and the angle of the vertical motor 222 is -24 degrees. Then the controller 110 controls so that, after 400 ms, the angle of the twist motor 221 is -34 degrees and then controls so that, after 500 ms, the angles of the twist motor 221 and the vertical motor 222 are 0 degrees, thereby completing the action. Additionally, in parallel with the driving of the twist motor 221 and the vertical motor 222, the controller 110 plays an animal sound of an abrupt whistle through the speaker 231 based on sound data of an abrupt whistle sound.

Then the controller 110 acquires the emotion change amount defined in the behavior table 124, and updates the emotion parameter by adding or subtracting the emotion change amount to or from the current emotion parameter (step S207).

Then the controller 110 sets the personality parameter in accordance with the update of the emotion parameter (step S208). Specifically, the controller 110 calculates, in accordance with (Equation 1) described above, the various personality values of the personality parameter from the emotion change amount.

Again with reference to FIG. 14, after execution of step S104 or step S106, the controller 110 determines whether to end the processing (step S107). When not ending the processing (step S107; NO), the controller 110 uses the clock function to determine whether a date has changed (step S108). When the date has not changed (step S108; NO), the processing returns to step S102.

When the date has changed (step S108; YES), the controller 110 adds 1 to the growth days count (step S109), and the processing returns to step S102.

When the operational unit 240 receives from the user a command for turning off the power the robot 200, the processing ends. When ending the processing (step S107; YES), the controller 110 stores the current parameter data 121 in a non-volatile memory (for example, flash memory) of the storage 120 (step S110), and ends the robot control processing illustrated in FIG. 14.

As described above, due to the inclusion of the selection table 123 and the behavior table 124, the robot 200 according to the present embodiment has a great extensibility and can perform a realistic simulation of a living creature. The selection table 123 stores, in association with one another, data indicating the action trigger, data indicating the growth days count, data indicating one or more sets of the behavior IDs, and data indicating for each of the sets of the behavior IDs a probability that the set of the behavior IDs is selected. Due to this configuration, the controller 110 can select, from among the behavior IDs stored in the selection table 123, a behavior ID that is optimum for the action trigger and the growth days count. The selection table 124 stores, in association with one another, data indicating the behavior ID, data indicating an action file defining the action of the robot 200, sound data indicating an animal sound, and data indicating the emotion change amount. Due to this configuration, the controller 110 can, based on the selected behavior ID, cause the robot 200 to perform an action defined in the behavior table 124 and update the emotion parameter. As described above, using two separate tables, namely the selection table 123 for selecting the behavior ID that is optimum for the action trigger and the growth days count and the behavior table 124 defining the action file and the like corresponding to the behavior ID, enables easier expansion and maintenance upon an increase in types of data of the action file and the like, as compared to the case of controlling actions with one table. This configuration allows the robot 200 to perform a realistic simulation of a living creature. Contrary to the above configuration, a configuration of using one table containing the content of the selection table 123 and the content of behavior table 124 leads to cumbersome information and non-easy expansion and therefore has a problem in that a great work is required for maintenance.

Modified Examples

An embodiment of the present disclosure is described above, but the above embodiment is merely an example and does not limit the scope of application of the present disclosure. That is, the embodiment of the present disclosure may be variously modified, and any modified embodiments are included in the scope of the present disclosure.

Although the above embodiment describes an example in which the robot 200 is pseudo-born at the time of first start up by the user after factory shipping and the growth parameter is the growth days count that is a count of days elapsed from the birth time, this is not limiting, and the growth parameter may be any parameter that indicates the pseudo-growth of the robot 200. For example, the growth parameter may be a cumulative value such as a cumulative value of the number of times the external stimulus is acquired, or may be determined based on the cumulative value of the number of times the external stimulus is acquired and the growth days count. This configuration allows the robot 200 to grow in accordance with external stimuli and thereby cause a user to feel a sense of pseudo-growth.

Although the above embodiment describes an example in which the emotion change amount is stored in the behavior table 124, any configuration may be employed that enables changing the pseudo-emotion of the robot 200 with the emotion change amount. For example, the emotion change amount may be stored in the selection table 123 in association with the action trigger. In this case, the parameter setter 113 updates the emotion parameter based on the emotion change amount associated with the action trigger. Then the parameter setter 113 sets the personality parameter indicating the pseudo-personality of the robot 200 in accordance with the update of the emotion parameter, and sets the pseudo-personality of the robot 200 based on the personality parameter. Additionally, a configuration may be employed in which the parameter setter 113 updates the emotion change amount in accordance with the external stimulus acquired by the external stimulus acquirer 111. This configuration can also allow the robot 200 to perform a realistic simulation of a living creature.

In the embodiment described above, the outer cover 201 is formed in a barrel shape from the head 204 to the body 206, and the robot 200 has a shape as if lying on its belly. However, the robot 200 is not limited to resembling a living creature that has a shape as if lying on its belly. For example, a configuration may be employed in which the robot 200 has a shape provided with arms and legs, and resembles a living creature that walks on four legs or two legs.

Although the above embodiment describes configuration in which the control device 100 is installed in the robot 200, a configuration may be employed in which the control device 100 is not installed in the robot 200 but, rather, is a separated device (for example, a server). In the case of the configuration in which the control device 100 is provided outside the robot 200, the robot 200 communicates via a communicator thereof with the control device 100 for transmission and receipt of data therebetween. Via such communication as above with the robot 200, the external stimulus acquirer 111 acquires the external stimulus detected by the sensor unit 210, and the action controller 114 controls the driver 220 and the outputter 230.

In the above embodiment, in the controller 110, the CPU executes the program stored in the ROM to function as the various components, namely, the external stimulus acquirer 111, the parameter setter 113, and the action controller 114. However, the present disclosure is not limited with the configuration in which only one CPU executes processing to serve as the controller 110, and the configuration may be employed in which multiple CPUs execute processing in cooperation with each other. Furthermore, the controller 110 may include, for example, dedicated hardware such as an Application Specific Integrated Circuit (ASIC), a Field-Programmable Gate Array (FPGA), various control circuitry, or the like instead of the CPU, and this dedicated hardware may function as the various components, namely the external stimulus acquirer 111, the parameter setter 113, and the action controller 114. In this case, the functions of each of the components may be achieved by individual pieces of hardware, or the functions of each of the components may be collectively achieved by a single piece of hardware. Furthermore, the configuration may be employed in which a portion of the functions of the components is achieved by dedicated hardware and the other portion is achieved by software or firmware.

Furthermore, based on the ability to provide a robot previously equipped with the configuration for achieving the functions according to the present disclosure, an existing information processing device or the like, by use of the program, can be made to function as the robot according to the present disclosure. That is, using a program for achieving each functional configuration of the robot 200 of the above embodiment so as to be executable by a CPU or the like that controls an existing information processing device or the like enables causing the existing information processing device or the like to function as the robot according to the present disclosure.

Additionally, any method may be used to use the program. For example, the program can be used by storage on a non-transitory computer-readable recording medium such as a flexible disc, a compact disc (CD) ROM, a digital versatile disc (DVD) ROM, and a memory card. Furthermore, the program can be superimposed on a carrier wave and used via a communication medium such as the Internet. For example, the program may be posted to and distributed via a bulletin board system (BBS) on a communication network. Moreover, a configuration may be employed in which the aforementioned processing is executable by starting this program and executing under control of an operating system (OS) similarly to other application programs.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

**Claims**

1. A robot (200) that acts autonomously, comprising:

> at least one memory storing a first table and a second table, the first table storing a growth parameter indicating a growth of the robot (200) and data indicating behavior information specifying an action of the robot (200) corresponding to the growth parameter in association with each other, the second table storing data indicating the behavior information and data indicating an action file defining the action of the robot (200) in association with each other; and at least one processor configured to acquire the growth parameter and cause, based on data stored in the first table and data stored in the second table, the robot (200) to perform an action corresponding to the acquired growth parameter.

2. The robot (200) according to claim 1, wherein

the first table stores, in association with one another, the growth parameter indicating the growth of the robot(200), the data indicating the behavior information, and data indicating a probability that the behavior information is selected, and
the at least one processor is configured to cause, based on the data stored in the first table and the data stored in the second table, the robot (200) to perform an action among a plurality of actions corresponding to the acquired growth parameter, the action to be performed by the robot (200) being selected based on the probability.

3. The robot (200) according to claim 2, wherein

the at least one processor is configured to acquire an external stimulus,
the first table further contains data indicating a trigger for an action corresponding to the external stimulus and stores, in association with one another, data indicating the trigger, the growth parameter, the data indicating the behavior information, and the data indicating the probability that the behavior information is selected, and
the at least one processor is configured to, upon detecting the external stimulus, the robot (200) to perform an action based on the trigger.

4. The robot (200) according to any one of claims 1 to 3, wherein

the second table contains sound data indicating an animal sound corresponding to the behavior information, and
the at least one processor is configured to cause the robot (200) to perform an action based on the action file and the sound data that correspond to the behavior information.

5. The robot (200) according to any one of claims 1 to 3, wherein

the at least one processor is configured to set a parameter indicating a pseudo-emotion and a pseudo-personality of the robot (200),

the second table contains data indicating an emotion change amount corresponding to the behavior information, and
the at least one processor is configured to update an emotion parameter based on the emotion change amount corresponding to the behavior information, set a personality parameter indicating the pseudo-personality of the robot (200) in accordance with the update of the emotion parameter, and set the pseudo-personality based on the personality parameter.

6. The robot (200) according to any one of claims 1 to 3, wherein

the at least one processor is configured to set a parameter indicating a pseudo-emotion and a pseudo-personality of the robot (200),
the first table contains data indicating an emotion change amount corresponding to a trigger, and
the at least one processor is configured to update an emotion parameter based on the emotion change amount corresponding to the trigger, set a personality parameter indicating the pseudo-personality of the robot (200) in accordance with the update of the emotion parameter, and set the pseudo-personality based on the personality parameter.

7. The robot (200) according to claim 5, wherein

the personality parameter includes a plurality of personality values that express degrees of mutually different personalities, and
the at least one processor is configured to set a pseudo-personality of the robot (200) based on the personality values.

8. The robot (200) according to claim 5, wherein

the behavior information contained in the first table includes behavior information depending on the pseudo-personality of the robot (200), and
the at least one processor is configured to select, based on the set pseudo-personality of the robot (200), the behavior information corresponding to the personality, and cause the robot (200) to perform an action based on the selected behavior information.

9. The robot (200) according to claim 1 or 2, wherein the growth parameter contains data indicating an elapsed time from a reference date and time.

10. A robot (200) control method, comprising:

acquiring a growth parameter indicating a growth of the robot (200),

referencing at least one memory storing a first table and a second table, the first table storing a growth parameter indicating a growth of the robot (200) and data indicating behavior information specifying an action of the robot (200) corresponding to the growth parameter in association with each other, the second table storing data indicating the behavior information and data indicating an action file defining the action of the robot (200) in association with each other; and

causing, based on data stored in the first table and data stored in the second table, the robot (200) to perform an action corresponding to the acquired growth parameter.

11. A program for a computer for a robot (200) that acts autonomously and that stores a first table and a second table, the first table storing a growth parameter indicating a growth of the robot (200) and data indicating behavior information specifying an action of the robot (200) corresponding to the growth parameter in association with each other, the second table storing data indicating the behavior information and data indicating an action file defining the action of the robot (200) in association with each other, the program causing the computer to function as:

a processor configured to acquire a parameter indicating the growth of the robot (200) and cause, based on data stored in the first table and data stored in the second table, the robot (200) to perform an action corresponding to the acquired growth parameter.

# FIG. 1

# FIG. 2

# FIG. 3

# FIG. 4

# FIG. 5

# FIG. 6

# FIG. 7

# FIG. 8

200

CONTROL DEVICE — 100

ROBOT

CONTROLLER — 110

EXTERNAL STIMULUS ACQUIRER — 111

BL

PARAMETER SETTER — 113

ACTION CONTROLLER — 114

SENSOR UNIT — 210

STORAGE — 120

PARAMETER DATA — 121

SELECTION TABLE — 123

BEHAVIOR TABLE — 124

MOTION TABLE — 125

DRIVER — 220

OUTPUTTER — 230

OPERATIONAL UNIT — 240

# FIG. 9

# FIG. 10

400

ACTIVE

10

5

SHY ◄ 10    5    0    5    10 ► HAPPY

5

10

SPOILED

# FIG. 11

SELECTION TABLE 123

| ACTION TRIGGER | GROWTH DAYS COUNT | BABY BEHAVIOR | | BASIC BEHAVIOR | | PERSONALITY BEHAVIOR | | EMOTION BEHAVIOR | |
|---|---|---|---|---|---|---|---|---|---|
| | | PROB ABILI TY | BEHAVIOR ID | PROB ABILI TY | BEHAVIOR ID | PROB ABILI TY | BEHAVIOR ID | PROB ABILI TY | BEHAVIOR ID |
| HEAD IS PETTED | 0–2 | 100 | 10-12 | - | - | - | - | - | - |
| | 3 | 80 | 10-12 | 20 | 20–22 | - | - | - | - |
| | 4 | 60 | 10-12 | 40 | 20–22 | - | - | - | - |
| | 5 | 40 | 10-12 | 60 | 20–22 | - | - | - | - |
| | 6 | 20 | 10-12 | 80 | 20–22 | - | - | - | - |
| | 7-9 | - | - | 60 | 20–22 | 20 | 30–33 | 20 | 40–42 |
| | 10-15 | - | - | 50 | 20–22 | 30 | 30–33 | 20 | 40–42 |
| | 16-20 | - | - | 45 | 20–22 | 35 | 30–33 | 20 | 40–42 |
| | 21-25 | - | - | 40 | 20–22 | 40 | 30–33 | 20 | 40–42 |
| | 26-30 | - | - | 35 | 20–22 | 45 | 30–33 | 20 | 40–42 |
| | 31-40 | - | - | 30 | 20–22 | 50 | 30–33 | 20 | 40–42 |
| | 41- | - | - | 20 | 20–22 | 60 | 30–33 | 20 | 40–42 |
| ... | ... | ... | ... | ... | ... | ... | ... | ... | ... |

# FIG. 12

BEHAVIOR TABLE 124

| BEHAVIOR ID | ACTION CONTENT | ACTION FILE | ANIMAL SOUND | EMOTION CHANGE AMOUNT |
|---|---|---|---|---|
| 10 | BABY BEHAVIOR | 0_m10_1.txt | #10-32 | X+DXP |
| 11 | BABY BEHAVIOR | 0_m11_1.txt | #10-29 | X+DXP |
| 12 | BABY BEHAVIOR | 0_m12_1.txt | #1-39 | X+DXP |
| ... | ... | ... | ... | ... |
| 20 | BASIC BEHAVIOR 1 | 0_m21_1.txt | #1-20 | X+DXP |
| 21 | BASIC BEHAVIOR 1 | 0_m22_1.txt | #1-10 | X+DXP |
| 22 | BASIC BEHAVIOR 1 | 0_m23_1.txt | #2-11 | X+DXP |
| ... | ... | ... | ... | ... |
| 30 | PERSONALITY: HAPPY | 0_m30_1.txt | #1-56 | X+DXP |
| 31 | PERSONALITY: SHY | 0_m31_1.txt | #2-11 | X+DXP |
| 32 | PERSONALITY: ACTIVE | 0_m32_1.txt | — | X+DXP |
| 33 | PERSONALITY: SPOILED | 0_m33_1.txt | #10-32 | X+DXP |
| ... | ... | ... | ... | ... |
| 40 | EMOTION BEHAVIOR 1 | 0_m40_1.txt | #1-11 | X+DXP |
| 41 | EMOTION BEHAVIOR 2 | 0_m41_1.txt | #1-11 | X+DXP |
| 42 | EMOTION BEHAVIOR 3 | 0_m42_1.txt | #1-11 | X+DXP |
| ... | ... | ... | ... | ... |

# FIG. 13

ACTION TABLE 125

| ACTION FILE | TIME (ms) | TWIST MOTOR | VERTICAL MOTOR |
|---|---|---|---|
| ⋮ | ⋮ | ⋮ | ⋮ |
| 0_m21_1.txt | 100 | 0 | 0 |
|  | 100 | 0 | -24 |
|  | 700 | 0 | -24 |
|  | 500 | 34 | -24 |
|  | 400 | -34 | -24 |
|  | 500 | 0 | 0 |
| ⋮ | ⋮ | ⋮ | ⋮ |
| 0_m22_1.txt | 100 | 0 | 0 |
|  | 100 | 0 | -10 |
|  | 700 | 0 | -20 |
|  | 500 | 34 | -24 |
|  | 400 | -34 | -24 |
|  | 500 | 0 | 0 |
| ⋮ | ⋮ | ⋮ | ⋮ |
| 0_m23_1.txt | 750 | 0 | 30 |
|  | 800 | 0 | 24 |
| ⋮ | ⋮ | ⋮ | ⋮ |

# FIG. 14

```
      ROBOT CONTROL
        PROCESSING
            │
            │  S101
            ▼
   SET PARAMETER DATA
            │
            │  S102
            ▼
    IS THERE EXTERNAL ───── YES ──────────────┐
        STIMULUS?                              │
            │ NO                               │ S103
            │  S105                            ▼
            ▼                        ACQUIRE EXTERNAL
   NO ── SPONTANEOUS                    STIMULUS
          ACTION?                          │
            │ YES                          │ S104
            │  S106                        ▼
            ▼                        ACTION CONTROL
   SPONTANEOUS ACTION                 PROCESSING
      PROCESSING                         │
            │                            │
            ▼◄───────────────────────────┘
            │
            │  S107
            ▼
         END? ───── YES ──────────────┐
            │ NO                       │ S110
            │  S108                    ▼
            ▼                   STORE PARAMETER
   NO ── HAS DATE CHANGED?             DATA
            │ YES                      │
            │  S109                    ▼
            ▼                         END
   ADD 1 TO GROWTH DAYS COUNT
```

# FIG. 15

ACTION CONTROL PROCESSING (S104)

S201
ACQUIRE GROWTH DAYS COUNT

S202
READ OUT PROBABILITY OF SELECTING ACTION

S203
SELECT ACTION TYPE

S204
SELECT BEHAVIOR ID

S205
ACQUIRE ACTION FILE

S206
CAUSE ROBOT TO PERFORM ACTION

S207
UPDATE EMOTION PARAMETER

S208
SET PERSONALITY PARAMETER

END

Europäisches
Patentamt

European
Patent Office

Office européen
des brevets

# EUROPEAN SEARCH REPORT

**Application Number**

EP 24 20 1686

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/299999 A1 (HASEGAWA HIROKAZU [JP] ET AL) 22 September 2022 (2022-09-22)<br>* paragraph [0066] *<br>* paragraph [0070] *<br>* paragraph [0078] - paragraph [0081] *<br>* paragraph [0086] - paragraph [0095] *<br>* paragraph [0121] *<br>* paragraph [0124] - paragraph [0130] *<br>* figures 11 - 16 * | 1-11 | INV.<br>G06N3/008 |
| X | US 2006/041332 A1 (SABE KOHTARO [JP] ET AL) 23 February 2006 (2006-02-23)<br>* paragraph [0075] *<br>* paragraph [0105] - paragraph [0107] *<br>* paragraph [0116] - paragraph [0123] *<br>* paragraph [0142] - paragraph [0145] *<br>* paragraph [0226] *<br>* paragraph [0251] *<br>* figures 5 - 9 * | 1-11 | |
| A | US 2022/297018 A1 (HASEGAWA HIROKAZU [JP] ET AL) 22 September 2022 (2022-09-22)<br>* the whole document * | 1-11 | TECHNICAL FIELDS SEARCHED (IPC)<br><br>B25J<br>G06N |
| A | JP 2022 142109 A (CASIO COMPUTER CO LTD) 30 September 2022 (2022-09-30)<br>* the whole document * | 1-11 | |
| A | US 2019/224853 A1 (GEWECKE THOMAS [US] ET AL) 25 July 2019 (2019-07-25)<br>* the whole document * | 1-11 | |

The present search report has been drawn up for all claims

| Place of search | Date of completion of the search | Examiner |
|---|---|---|
| The Hague | 29 January 2025 | Falconi, Riccardo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 1686

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2025

| Patent document cited in search report | | | Publication date | Patent family member(s) | | | Publication date |
|---|---|---|---|---|---|---|---|
| US 2022299999 | A1 | | 22-09-2022 | JP | 7192905 | B2 | 20-12-2022 |
| | | | | JP | 7364016 | B2 | 18-10-2023 |
| | | | | JP | 2022142107 | A | 30-09-2022 |
| | | | | JP | 2023024848 | A | 17-02-2023 |
| | | | | US | 2022299999 | A1 | 22-09-2022 |
| US 2006041332 | A1 | | 23-02-2006 | CN | 1338980 | A | 06-03-2002 |
| | | | | KR | 20010101883 | A | 15-11-2001 |
| | | | | US | 2003045203 | A1 | 06-03-2003 |
| | | | | US | 2006041332 | A1 | 23-02-2006 |
| | | | | WO | 0139932 | A1 | 07-06-2001 |
| US 2022297018 | A1 | | 22-09-2022 | JP | 7415989 | B2 | 17-01-2024 |
| | | | | JP | 7525021 | B2 | 30-07-2024 |
| | | | | JP | 2022142113 | A | 30-09-2022 |
| | | | | JP | 2023155303 | A | 20-10-2023 |
| | | | | JP | 2024127982 | A | 20-09-2024 |
| | | | | US | 2022297018 | A1 | 22-09-2022 |
| JP 2022142109 | A | | 30-09-2022 | JP | 7314967 | B2 | 26-07-2023 |
| | | | | JP | 2022142109 | A | 30-09-2022 |
| | | | | JP | 2023115370 | A | 18-08-2023 |
| US 2019224853 | A1 | | 25-07-2019 | CN | 109789550 | A | 21-05-2019 |
| | | | | EP | 3490761 | A1 | 05-06-2019 |
| | | | | US | 2019224853 | A1 | 25-07-2019 |
| | | | | US | 2023373097 | A1 | 23-11-2023 |
| | | | | WO | 2018022808 | A1 | 01-02-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003285286 A